# EUROPEAN PATENT APPLICATION

(11) **EP 2 432 100 A2**
(43) Date of publication of application: **21.03.2012**
(21) Application number: 11180954.7
(22) Date of filing: 12.09.2011
(51) Int. Cl.: H02K 3/04, H02K 3/47

(54) **Flake coil**

(30) Priority: 15.09.2010 TW 099217842
(71) Applicant: Lai, Ping-Li, Woo-Jih Taichung City T'ai pei (TW)
(72) Inventor: Lai, Ping-Li, Woo-Jih Taichung City T'ai pei (TW)
(74) Representative: ip21 Ltd

(57) **Abstract**

A flake coil integrally made of a conductive material coated with an insulation layer. The flake coil includes multiple coil units, which are sequentially stacked. Each coil unit has a first coil section and a second coil section, which are arranged side by side. A split is defined between the first and second coil sections. A first end of the first coil section is integrally connected with a first end of the second coil section. A second end of the first coil section is integrally connected with a second end of the second coil section of an adjacent coil unit via a connection board section. The connection board section is bent back over itself to stack the coil units. Accordingly, the coil units are continuously stacked to form multiple stacks of coil units for one-way transmitting current. The flake coil is applicable to a generator or a motor.

## Description

### BACKGROUND OF THE INVENTION

### FIELD OF THE INVENTION

The present invention relates generally to a flake coil, and more particularly to an integrally formed flake coil including multiple coil units. A connection board section is connected between each two adjacent coil units. The connection board section is bent back over itself to stack the coil units. Accordingly, the coil units are continuously stacked to form multiple stacks of coil units.

### DESCRIPTION OF THE PRIOR ARTS

The conventional coil applied to a generator or a motor is generally made of a wire material wound around a seat body. When magnetic lines pass through the coil, a potential is induced to generate current passing through the coil. Such coil is applicable to a generator to generate power. Alternatively, a current can pass through the coil to magnetize an iron core enclosed in the coil so as to create an electromagnetic field. Such coil is applicable to a motor.

The number of turns in the coil wound around the seat body is very large so that it is complicated and time-consuming to manufacture the coil. As a result, the manufacturing cost is relatively high. In addition, the coil is made of a wire material with extremely small diameter. Therefore, when transmitting great current, the coil is subject to breakage and aging. As a result, the generator or the motor is very likely to damage.

Moreover, the coil is generally wound from a first end to a second end and then wound from the second end to the first end. In this case, the magnetic fields will offset each other to lead to poor magnetic efficiency.

An improved coil has been developed to partially overcome the above problems. The improved coil includes a start section metal plate, multiple middle section metal plates and an end section metal plate. These metal plates are sequentially connected with each other. A connection section is connected between each two adjacent middle section metal plates. The connection section is bent over itself to form a folded section so as to sequentially stack the middle section metal plates into a multilayer frame-shaped coil structure. The folded sections of the adjacent layers of middle section metal plates are misaligned and spaced by an angular interval rather than positioned in the same axial position. Accordingly, even if the folded sections are deformed and damaged in surface isolation treatment, a short circuit can be still avoided.

The above conventional coil structure has the form of a hollow cylindrical body or a hollow solid rectangular body. An iron core is fitted through the hollow section of the coil. In the case that it is unnecessary to dispose any iron core in the hollow section of the coil, the hollow section will unnecessarily occupy much area and space. This leads to a considerably large volume of the coil.

### SUMMARY OF THE INVENTION

It is therefore a primary object of the present invention to provide a flake coil integrally made of a conductive material coated with an insulation layer. The flake coil includes multiple coil units, which are sequentially stacked. Each coil unit has a first coil section and a second coil section, which are arranged side by side. A split is defined between the first and second coil sections. A first end of the first coil section is integrally connected with a first end of the second coil section. A second end of the first coil section is integrally connected with a second end of the second coil section of an adjacent coil unit via a connection board section. The connection board section is bent back over itself to stack the coil units. Accordingly, the coil units are continuously stacked to form multiple stacks of coil units for one-way transmitting current. The flake coil is applicable to a generator or a motor.

It is a further object of the present invention to provide the above flake coil in which the coil units are V-shaped coil units or U-shaped coil units. The connection board section between two adjacent V-shaped or U-shaped coil units is bent back over itself to projectively overlap the two adjacent V-shaped or U-shaped coil units with each other, whereby the coil units are stacked to form a stack of coil units. When magnetic lines penetrate through the stack of continuous coil units, a potential is induced to generate current passing through the continuous V-shaped or U-shaped coil units. This is applicable to a generator to generate power. Alternatively, a current can pass through the flake coil to create a magnetic field in the core material held in the flake coil. This is applicable to the coil of a motor.

It is still a further object of the present invention to provide the above flake coil in which a core material is positioned in the splits of the coil units as the path of the magnetic lines.

The flake coil of the present invention can be used instead of the conventional coil made of small-diameter wire materials by winding. The manufacturing process of the flake coil is simpler and the flake coil is not subject to breakage. Moreover, the flake coil is able to achieve and bear greater current output so that the efficiency per unit volume is increased.

The present invention can be best understood through the following description and accompanying drawings, wherein:

### BRIEF DESCRIPTION OF THE DRAWINGS

Fig. 1 is a plane stretched view of a first embodiment of the present invention;
Fig. 2 is a perspective stretched view of the first embodiment of the present invention;
Fig. 3 is a perspective view showing a stack of coil units of the first embodiment of the present invention;
Fig. 4 is a perspective view showing multiple stacks of coil units of the first embodiment of the present invention;
Fig. 5 is a perspective view showing that magnetic lines penetrate through the first embodiment of the present invention to generate current in a direction of the arrows;
Fig. 6 is a plane view showing that the stacks of coil units of the first embodiment of the present invention are annularly arranged;
Fig. 7 is a plane stretched view of a second embodiment of the present invention;
Fig. 8 is a plane stretched view of a third embodiment of the present invention; and
Fig. 9 is a perspective view showing a stack of coil units of the third embodiment of the present invention, in which a core material is held in the coil units.

### DETAILED DESCRIPTION OF THE PREFERRED EMBODIMENTS

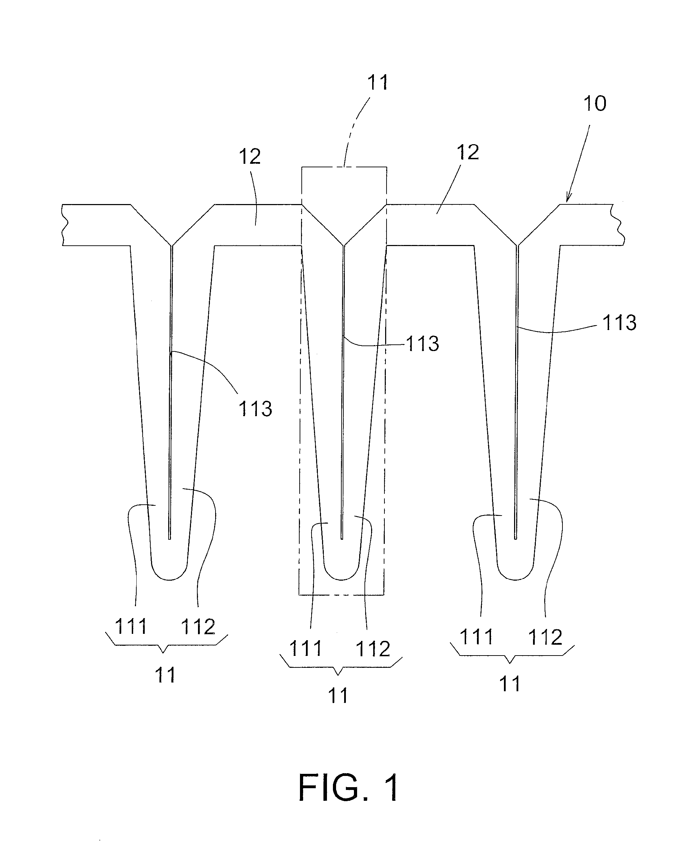

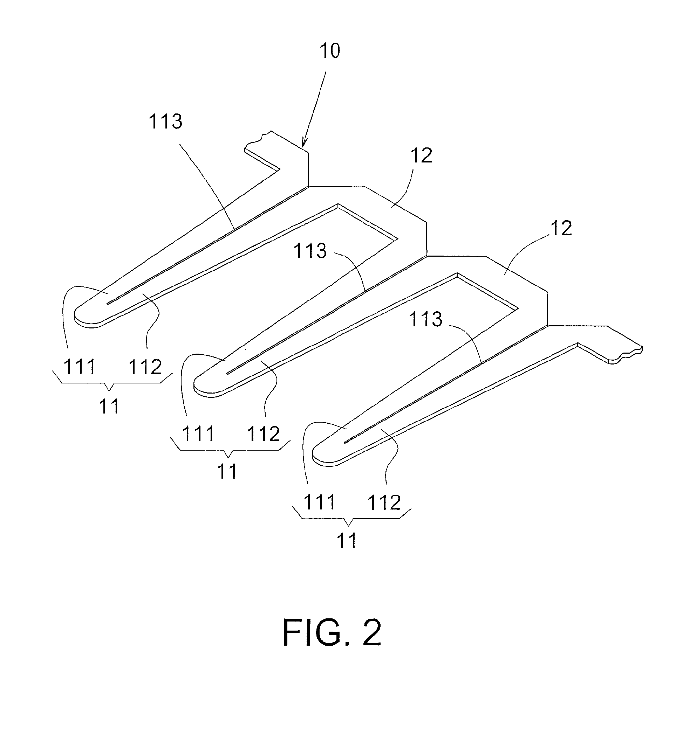

Please refer to Figs. 1 to 5. The flake coil 10 of the present invention is integrally made of a conductive material coated with an insulation layer. The flake coil 10 includes multiple coil units 11, which are sequentially stacked. Each coil unit 11 has a first coil section 111 and a second coil section 112. The first and second coil sections 11, 112 are arranged side by side. A split 113 is defined between the first and second coil sections 111, 112. A first end of the first coil section 111 is integrally connected with a first end of the second coil section 112. A second end of the first coil section 111 is integrally connected with a second end of the second coil section 112 of an adjacent coil unit 11 via a connection board section 12. The connection board section 12 is bent back over itself to stack the coil units 11. Accordingly, the coil units 11 are continuously stacked to form multiple stacks of coil units 11 for one-way transmitting current. The flake coil 10 is applicable to a generator or a motor.

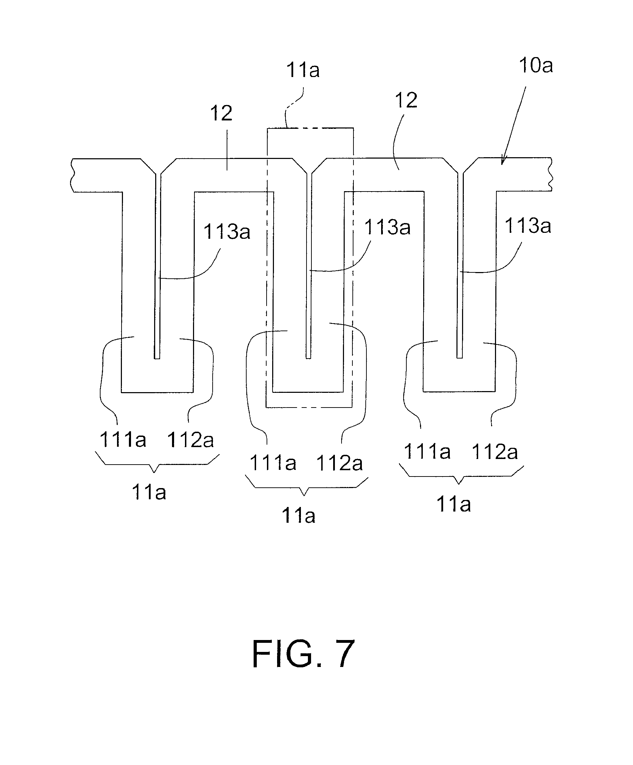

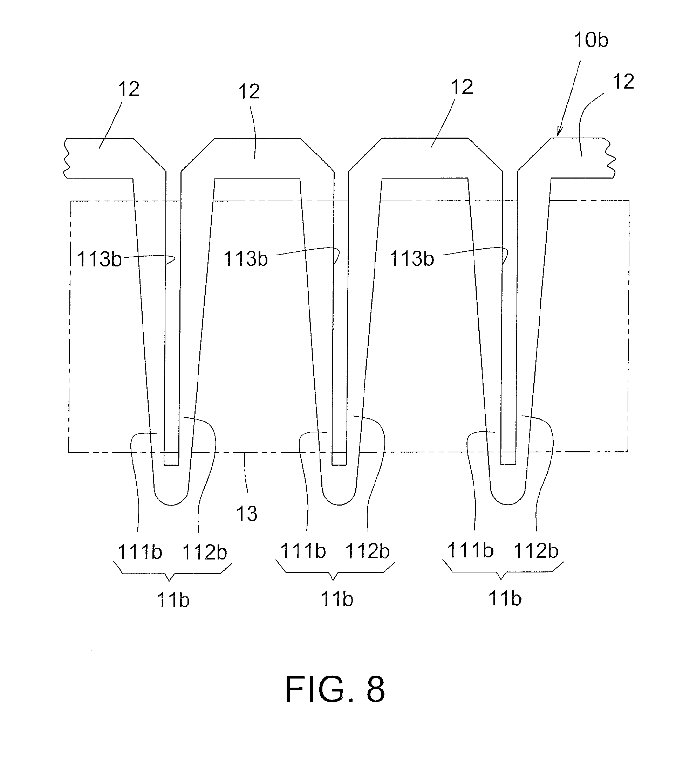

Please refer to Figs. 1 to 6. In the flake coil 10 of the present invention, the split 113 is defined between the first and second coil sections 111, 112 of each coil unit 11 to form a V-shaped coil unit 11. Alternatively, as shown in Fig. 7, a split 113a is defined between the first and second coil sections 111a, 112a of each coil unit 11a of the flake coil 10a to form a U-shaped coil unit 11a. Still alternatively, as shown in Fig. 8, a wider split 113b is defined between the first and second coil sections 111b, 112b of each coil unit 11b of the flake coil 10b to form a V-shaped coil unit 11b. A core material 13 is positioned in the wider splits 113b and extends therethrough.

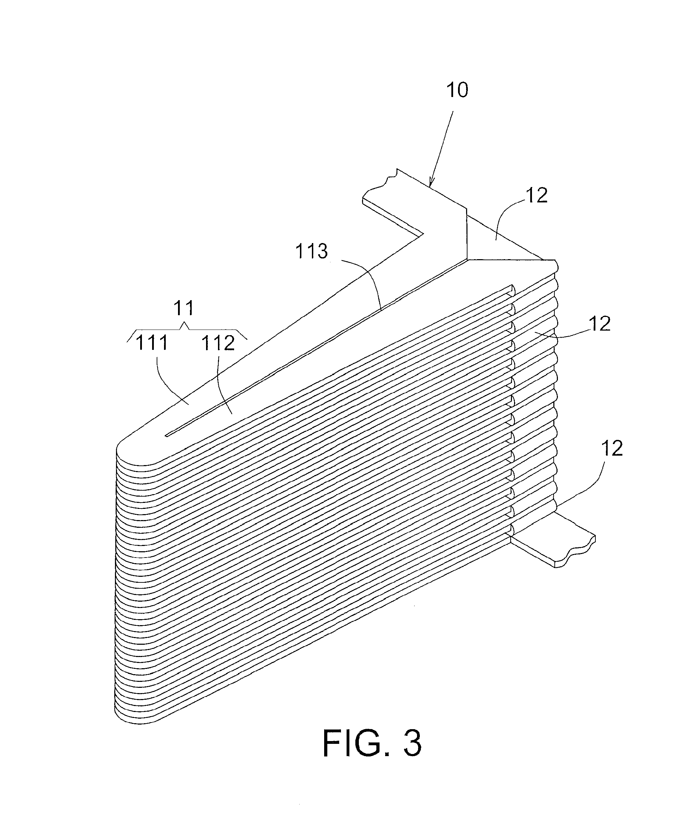

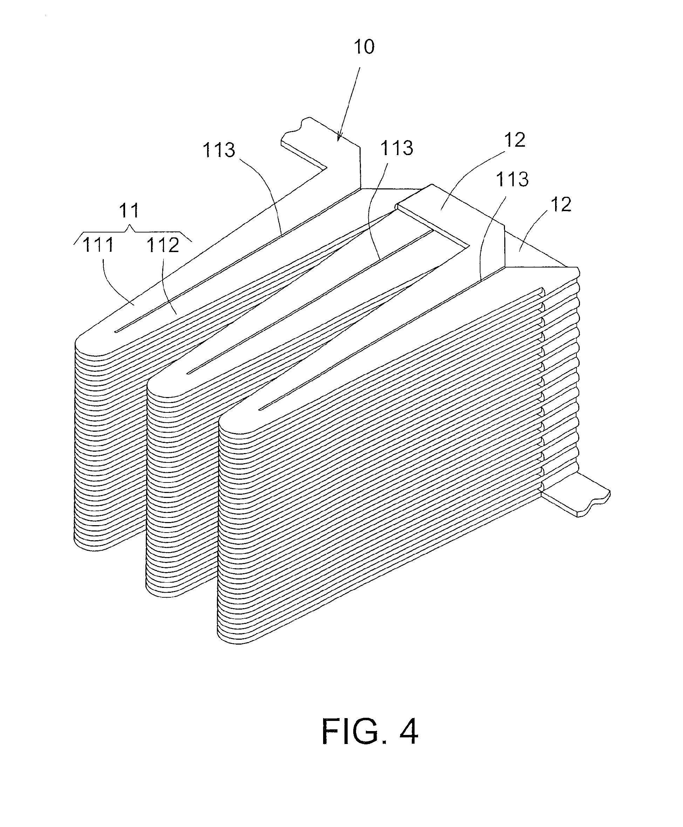

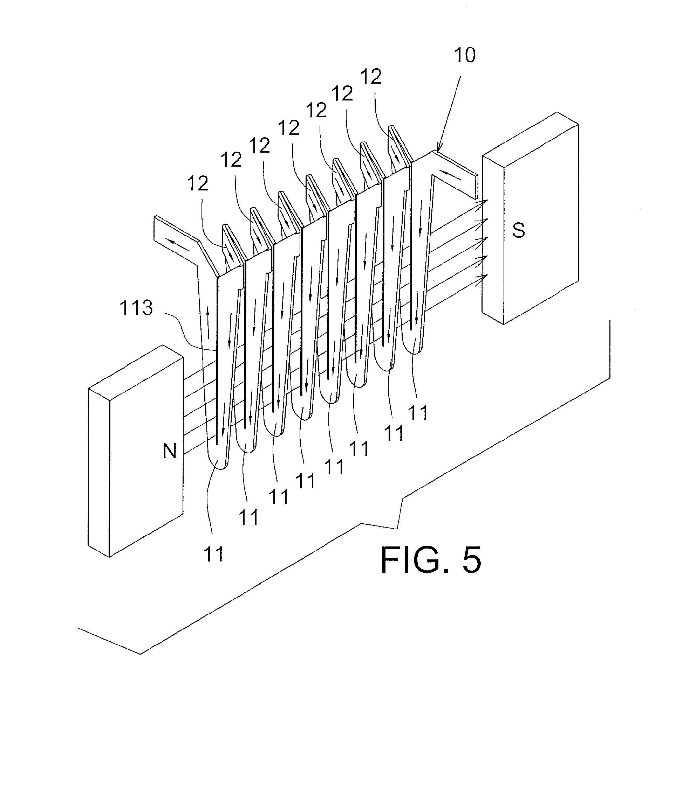

Please refer to Figs. 1, 2 and 3. The connection board section 12 between two adjacent V-shaped coil units 11 is bent back over itself to projectively overlap the two adjacent V-shaped coil units 11 with each other, whereby the coil units 11 are stacked to form one single stack of coil units 11 as shown in Fig. 3 or multiple stacks of coil units 11 as shown in Fig. 4. As shown in Fig. 5, when magnetic lines penetrate through the stack of continuous coil units 11, a potential is induced to generate current passing through the continuous V-shaped coil units 11 (in a direction of the arrows). This is applicable to a generator to generate power. Alternatively, a current can pass through the flake coil 10 to create a magnetic field in the core material 13 held in the flake coil 10. This is applicable to the coil of a motor.

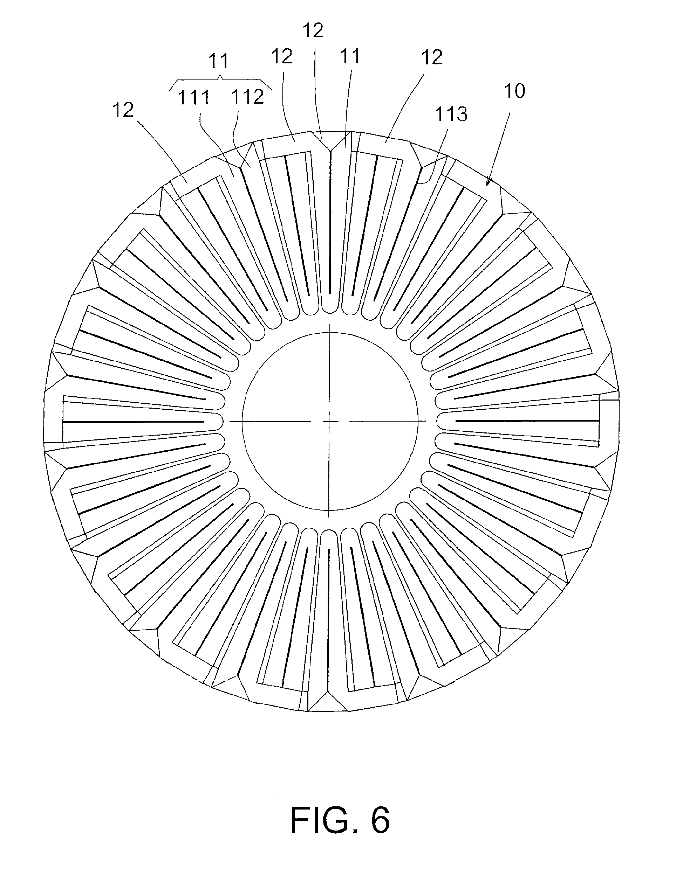

Referring to Fig. 6, in practice, the stacks of V-shaped coil units 11 can be annularly arranged to serve as, but not limited to, a stator of a generator or a motor.

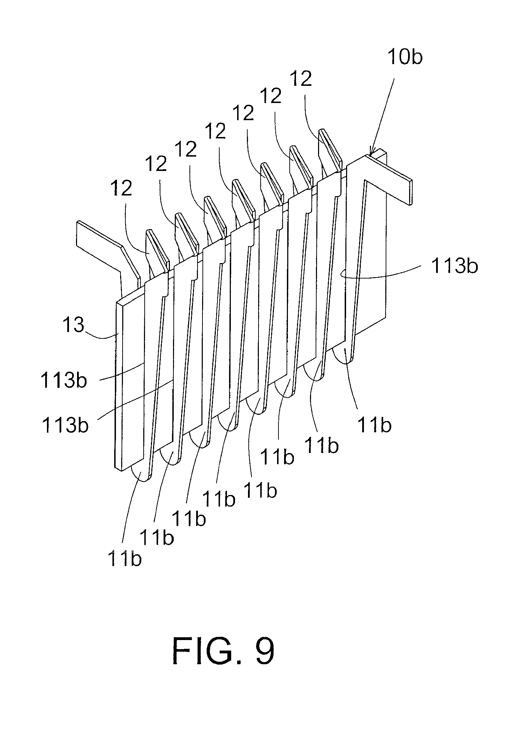

Referring to Figs. 8 and 9, the core material 13 is positioned in the wider splits 113b of the stacked coil units 11 b of the flake coil 10b and extends therethrough. The core material 13 serves to conduct the magnetic lines to penetrate therethrough. Accordingly, when current passes through the flake coil 10b, a magnetic field is induced in the core material 13.

The flake coil 10, 10a or 10b of the present invention can be used instead of the conventional coil made of small-diameter wire materials by winding. The manufacturing process of the flake coil is simpler and the flake coil is not subject to breakage. Moreover, the flake coil is able to achieve and bear greater current output.

The above embodiments are only used to illustrate the present invention, not intended to limit the scope thereof. Many modifications of the above embodiments can be made without departing from the spirit of the present invention.

## Claims

1. A flake coil comprising multiple coil units, the coil units being sequentially stacked, each coil unit having a first coil section and a second coil section, the first and second coil sections being arranged side by side, a split being defined between the first and second coil sections, a first end of the first coil section being integrally connected with a first end of the second coil section, a second end of the first coil section being integrally connected with a second end of the second coil section of an adjacent coil unit via a connection board section, the connection board section being bent back over itself to stack the coil units, whereby the coil units are continuously stacked to form at least one stack of coil units.

2. The flake coil as claimed in claim 1, wherein the coil units are integrally made of a conductive material coated with an insulation layer.

3. The flake coil as claimed in claim 1, wherein the coil units are continuously stacked to form one single stack of coil units.

4. The flake coil as claimed in claim 1, wherein the coil units are continuously stacked to form multiple stacks of coil units.

5. The flake coil as claimed in claim 1 or 2, wherein the coil units are V-shaped coil units.

6. The flake coil as claimed in claim 1 or 2, wherein the coil units are U-shaped coil units.

7. The flake coil as claimed in claim 1, wherein the splits of the coil units have such a width that a core material can be positioned in the splits and extend therethrough.
